Europäisches Patentamt

European Patent Office

Office européen des brevets

(19)

(11) Publication number: **0 254 489**
**B1**

# EUROPEAN PATENT SPECIFICATION

(12)

(45) Date of publication of the patent specification:
22.08.90

(51) Int. Cl.⁵: **B29C 63/46, B29C 55/22**
**// (B29K23/00, B29L23:22)**

(21) Application number: 87306317.6

(22) Date of filing: 16.07.87

(54) Method for lining pipes.

(30) Priority: 24.07.86 GB 8618087

(43) Date of publication of application:
27.01.88 Bulletin 88/4

(45) Publication of the grant of the patent:
22.08.90 Bulletin 90/34

(84) Designated Contracting States:
DE FR GB

(56) References cited:
FR-A- 2 096 557
GB-A- 1 310 915
US-A- 3 939 243

(73) Proprietor: BP Chemicals Limited, Belgrave
House 76 Buckingham Palace Road, London,
SW1W 0SU(GB)

(72) Inventor: Harries, Roger Charles, BP Chemicals Limited
Wellington House, 60/68 Wimbledon Hill Road
LondonSW19 7PE(GB)

(74) Representative: Hymers, Ronald Robson et al, BP
INTERNATIONAL LIMITED Patents Division Chertsey
Road, Sunbury-on-Thames Middlesex, TW16 7LN(GB)

**Description**

The present invention relates to a method for lining pipes and in particular to a method for lining pipes with a polyolefinic material.

It is known to use a variety of polymeric materials to line pipes. The polymeric materials may be used to provide better resistance to chemical attack than the material of the pipe itself. For example, polypropylene lined steel pipes are used to transport sulphuric acid and polyethylene is used to line pipes because it has excellent resistance at room temperature to salts, sodium and ammonium hydroxides and sulphuric, nitric and hydrochloric acids. Polymeric liners can also provide improved resistance to abrasion e.g. for pipelines transporting slurries. The use of polymeric liners has also been suggested for repairing pipes which have ruptured or been damaged by, for example, corrosion or erosion.

When lining a pipe with a polymeric liner, it is preferable to ensure a tight fit between the pipe wall and the liner in order to prevent slippage of the liner within the pipe and also to prevent the ingress of material, e.g. water, between the liner and the pipe.

Britsh Patent GB 1310915 discloses a method for lining a pipe with a polymeric material comprising forming a tube of the polymeric material, subjecting the tube to a drawing process so that the diameter of the tube is reduced, inserting the tube into a pipe of inside diameter slightly greater than the outside diameter of the drawn tube and treating the tube to cause reversion expansion of the polymeric material such that the tube engages the inside wall of the pipe. The method uses a technique of die drawing i.e. the tube is drawn directly from the die. The polymeric material must be crosslinked as it is drawn from the die.

British Patent Application GB2084686A discloses a method of lining pipework comprising butt-welding together a succession of polyolefin pipes of outside diameter greater than the internal diameter of the pipework to be lined, roll reducing the welded polyolefin pipes to an outside diameter less than the internal diameter of the pipework, feeding the welded polyolefin pipes into the pipework and treating the welded polyolefin pipes within the pipework to cause reversion expansion into engagement with the internal walls of the pipework.

It has been found that polyolefinic materials which exhibit two or more crystalline melting peaks when analysed by differential scanning calorimetry (DSC) do not have a tendency to "neck" when drawn i.e. the stress increases substantially uniformly to a macimum as the strain increases and does not fall after the yield stress has been reached.

It is an object of the present invention to provide a method for lining pipes which utilises polyolefinic materials which exhibit two or more crystalline melting peaks when analysed by DSC which method comprises drawing the polyolefinic material at a temperature between the lowest and the highest DSC peaks.

According to the present invention a method for lining a pipe with a polymeric material comprising forming a tube of the polymeric material, subjecting the tube to a drawing process so that the diameter of the tube is reduced, inserting the tube into a pipe of inside diameter slightly greater than the outside diameter of the drawn tube and treating the tube to cause reversion expansion of the polymeric material such that the tube engages the inside wall of the pipe is characterised in that the polymeric material is a polyolefinic material which exhibits two or more crystalline melting peaks when analysed by differential scanning calorimetry (DSC) and in that the drawing process comprises cooling the formed tube and subsequently heating it and drawing the tube at a temperature between the temperatures of the lowest and highest crystalline melting peaks.

The terms "highest crystalline melting peak" and "lowest crystalline melting peak" as used in this specification refer to the melting peak occuring at the highest and lowest temperatures respectively and not to the size of the peaks themselves. The method according to the present invention may be used to line any type of pipe including plastic pipe but is particularly useful for lining metal and concrete pipes. The method is particularly suitable for lining pipe having a circular cross-section but can also be used to line pipe of different cross-section e.g. ellipsoidal or pear-shaped pipe. The polyolefin tube is preferably the same shape as the pipe. If the pipe and tube are non-circular, the outside diameter of the tube and inside diameter of the pipe are not single values but refere to the corresponding diameters at particular positions. The method can be used to line lengths of pipe before installation. It can also be used to line pipelines after installation. Thus, for example, it can be used to line damaged sewer pipes or mains water pipes. The method is suitable for relatively small pipe e.g. 50mm and relatively large pipe e.g. 600mm.

Differential scanning calorimetry (DSC) is a well-known technique for measuring polymer crystallite melting temperatures. The presence of two or more peaks in a DSC trace indicates that the polymeric material comprises two or more crystalline species. Examples of polyolefinic materials which exhibit two DSC peaks are polypropylene, linear copolymers of ethylene with at least one alpha-olefin having from 8 to 18 carbon atoms and blends of polyolefins. Specific examples of linear ethylene and higher alpha-olefin copolymers which exhibit two DSC crystalline melting peaks are the copolymers of ethylene and 1-octene sold by Dow Chemical Company under the registered trade mark DOWLEX e.g. Dowlex 2045. Blends of polyolefins which exhibit two or more DSC crystalline melting peaks and are suitable for use in the present invention include blends of low pressure, high density polyethylene and low density (including linear low density) polyethylene.

Preferably there is at least 2°C, more preferably at least 5°C, between the lowest and the highest crystalline melting peaks as exhibited by DSC analysis of the polymeric material. For improved abrasion resistance, the polyolefinic material preferably has a relatively high molecular weight.

The method according to the present invention can be carried out using polymeric material which has not been crosslinked before it is drawn. It is possible to use a polymeric material which has been partially crosslinked before drawing, provided that the degree of crosslinking is not so great that it adversely affects the drawing of the tube. After reversion, the polyolefin can be partially or fully crosslinked using suitable known techniques.

The polymeric material from which tube is formed can contain known additives and fillers. For example, the polyolefin may be reinforced with fibres or filled with mineral or metal particles.

The method according to the present invention uses a "free-drawing" process rather than a "die-drawing" technique. This means that the tube is not simultaneously formed and drawn as it leaves an extrusion die but rather that the tube is first formed and subsequently drawn. It is therefore necessary to cool the tube after forming at least sufficiently to enable the outer surface of the tube to be gripped in the drawing apparatus without damaging the surface or distorting the geometry of the tube. Generally, the polyolefin tubes will be formed by extrusion and can be cooled by known techniques. Conveniently, the colling can be provided by the water bath which is conventionally used to cool extruded pipe as it leaves the dies. Typically, the extrudate is cooled to a temperature below about 100°C.

After cooling the formed tube, it is heated and drawn at a temperature between the lowest and highest DSC crystalline melting peaks. If there are more than two DSC peaks, the drawing temperature is preferably between the two highest peaks. More preferably, the tube is drawn at a temperature close to, but below, the highest DSC peak.

The tube can be drawn to reduce its outside diameter using known techniques and apparatus. For example, the polyolefin tube can be drawn between two haul-off units of the kind conventionally used in the production of pipe. The drawing is effected by operating the first and second haul-off units at different speeds.

This arrangement can be used to draw down the tube continuously as it is extruded from a pipe die and can also be used to draw down relatively short lengths of tube. Rollers which retard the throughput of the tube could be used in place of the first haul-off unit. Another possible method of drawing the tube would be to fix one end of the tube and pull the free end.

The method according to the present invention can be carried out by heating and drawing polyolefin tube formed in a separate process. However, in order to save energy, it is preferable to reduce the outside diameter of the polyolefin tube during the manufacture of the tube. Thus, according to a preferred embodiment of the present invention a method for lining pipe comprises forming the tube by extrusion of the polymeric material, cooling the tube sufficient to enable the outer surface to be gripped by a first haul-off unit without unduly damaging the surface of the tube or distorting the tube geometry, heating and drawing the tube to reduce its outside diameter, cooling the tube in order to freeze in the orientation, subsequently introducing the polyolefin tube into a pipe to be lined and treating the tube to cause reversion expansion such that it engages the inside wall of the pipe. The temperatures employed will depend inter alia on the polyolefinic material being used and the dimensions of the tube.

The size-reduced polyolefin tube may be cut into lengths or coiled for later insertion into pipes or a pipeline. Alternatively the size-reduced polyolefin tube can be used immediately to line pipes or a pipeline.

Treating the polyolefin tube within the pipe to cause reversion expansion may be by heating. The heating may be provided by any convenient means. For example a "pig" may be drawn through the polyolefin tube which "pig" is provided with heating means such as an electric fan heater. A hot fluid such as, for example, hot water or steam amy be passed through the lined pipe to provide the heat. It is also possible to provide the heat for reversion expansion of the polyolefin tube by heating the pipe. This technique may cause melting of the surface of the polyolefin tube adjacent the pipe thereby promoting adhesion between the polyolefin tube and the pipe. If the polyolefin tube contains sufficient metal filler, induction heating can be used to cause reversion expansion of the tube.

Alternatively or in addition to heating, the polyolefin tube may, for example, be treated to cause reversion expansion by applying super atmospheric internal pressre.

Although the reversion expansion of the polyolefin tube within the pipe results in a tight fit between the polyolefin tube and the pipe, an adhesive may usefully be employed between the polyolefin tube and the pipe. An adhesive is particularly useful when the polyolefin lined pipe is being used for the transport of a slurry which causes abrasive wear of the polyolefin liner. Although the polyolefin e.g. polyethylene is resistant to abrasion, eventually the liners will be worn through at some point. When this happens, the adhesive resists collapse of the liner due to the net inward force created by the Bernoulli effect. Any suitable adhesive composition may be used. The adhesive may be applied by coating the inside surface of the pipe and/or the outside surface of the polyolefin tube before assembly.

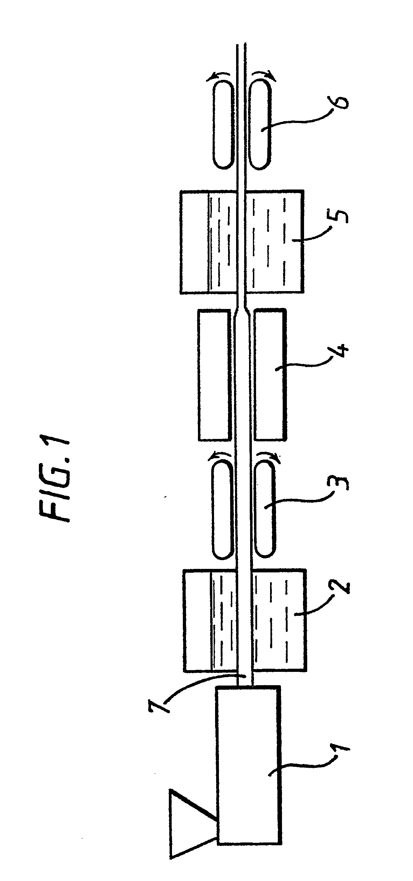

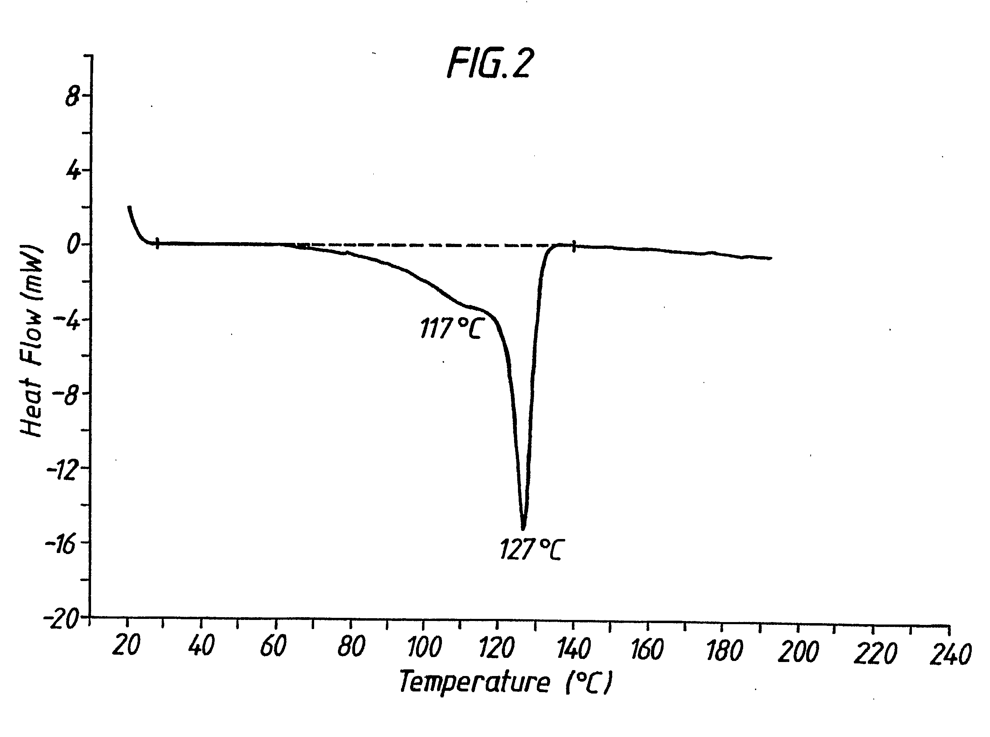

The invention is illustrated by reference to the accompanying drawings in which Figure 1 is a schematic representation of equipment which can be used in one embodiment of the method according to the present invention and Figure 2 represents a DSC plot for a material suitable for use in the method according to the present invention.

The equipment illustrated in Figure 1 comprises an extruder 1, a first cooling water bath 2, a first haul-off unit 3, a heating unit 4, a second cooling water bath 5 and a second haul-off unit 6.

The polyolefinic material is formed into a tube 7 by extrusion from the extruder 1. The first haul-off unit 3 together with the die system of the extruder 1 and the sizing sleeve (not shown) determines the initial size of the polyolefin tube 7. Between the extruder 1 and the first haul-off unit 3, the polyolefin tube 7 is passed through the first cooling water bath 2 in order to cool at least the surface of the polyolefin tube to provide a stable load supporting geometry which can gripped by the haul-off unit 3 without damaging the surface of the tube. The polyolefin tube 7 is drawn between the first haul-off unit 3 and the second haul-off unit 6 which operates at a higher speed than the first. The heating unit 4 heats the tube to a temperature between the lowest and highest DSC peaks exhibited by DSC analysis of the polyolefinic material. The second cooling water bath 5 is used to cool the polyolefin tube in order to "freeze in" the orientation and to provide a stable load supporting geometry which can be gripped by the haul-off 6 without damage. The size-reduced polyolefin tube 7 may then be cut into lengths or coiled for later insertion into pipes or a pipeline. Alternatively, the polyolefin tube can be used immediately to line pipes or a pipeline. The pipe into which the polyolefin tube 7 is inserted may have a roughened or ridged internal surface to resist slippage, particularly circumferential slippage of the tube within the pipe.

Figure 2 is a DSC trace for a blend comprising equal parts of two different polyethylenes which blend is suitable for use in the method according to the present invention. The composition and preparation of the blend are described in Example 2 hereinafter.

The present invention is illustrated by the following examples.

## Example 1

Equal parts by weight of a high density polyethylene and a linear low density polyethylene were used to produce, by extrusion, a polyolefin tube having an outside diameter of 2.6 cm and a wall thickness of 3.9 mm. The blend of polyethylenes used was the same as that described in Example 2 hereinafter. 75 cm lengths of the polyolefin tube were heated and drawn in order to reduce the outside diameter of the tube. The apparatus used to draw the polyolefin tube was a modified Instron Rheometer. The polyolefin tube was drilled at each end in order to accept a metal bar which could be gripped by the conventional clamps of the Instron Rheometer. The ends of the tube through which the metal bars had been inserted remained outside of the heating oven. The central portion of each polyolefin tube measuring approximately 50 cm was heated in the oven to a temperature of 118°C and drawn at a cross head speed of 10 cm/minute. The outside diameter of the polyolefin tube was reduced to about 2.3 cm and the length was increased by about 14cm. After drawing the polyolefin tube was cooled using liquid carbon dioxide. The central portion of the polyolefin tube which has been uniformally reduced in diameter was reversion expanded in an oven at a temperature of 120°C. The outside diameter increased to 2.5 cm. Samples of the polyolefin tubes were used to line mild steel pipes. The polyolefin tubes were inserted into the mild steel pipe and heated in an oven to a temperature of 120°C. A tight fit was achieved between the polyolefin tubes and the mild steel pipes and the polyolefin tubes could not be pulled from the pipe.

## Example 2

Drawn polyolefin tube suitable for use in the method according to the present invention was produced using apparatus substantially as illustrated in Figure 1.

The polyolefinic material used was a blend comprising equal parts by weight of a high density polyethylene and a linear low density polyethylene. The high density polyethylene used was a commercially available material sold by BP Chemicals Limited under the trade designation Rigidex HM4560EP (formerly sold as Rigidex H060-45P). RIGIDEX is a registered trade mark. The high density polyethylene had a melt flow rate (21.6kg load) of 6 dg/min as determined by standard test ISO 1133-1981: Condition 7 and had a density of 947kg/m$^3$ as determined by standard test ISO 1872/1-1986. The linear low density polyethylene used was commercially available material sold by BP Chemicals Limited under the trade designation Innovex LL0209AA (formerly sold as LL101AA). INNOVEX is a registered trade mark. The linear low density polyethylene had a melt flow rate of 0.9 dg/min as determined by standard test ISO 1133: Condition 4, a density of 920kg/m$^3$ as determined by standard test ISO 1872/1-1986 and a Vicat softening point of 100°C as determined by standard test ISO 306. Two tonnes of the polyolefin blend was produced by mixing the two polymers in a toroidal mixer and then compounding in a Werner & Pfleiderer ZSK 53 twin screw extruder operating at a screw speed of 200 rpm and the barrel temperatures in all zones being set at 200°C.

The polyolefin blend was analysed by differential scanning calorimetry and Figure 2 is a drawing of the trace obtained. There is a pronounced higher crystalline melting peak at about 127°C and a less pronounced but nevertheless significant lower crystalline melting peak at about 117°C.

The first part of the production process is conventional for the manufacture of extruded pipe. The polymer blend described above was extruded through a pipe die fitted to a 2.5 inch (63mm) single screw extruder. The extruded pipe was passed through a first vacuum water bath which had a total length of 10 feet (3m) the first 6 feet (1.8m) of which was under a vacuum of 6 inch Hg (20.2kPa). The water bath was fitted with a 63mm sizing sleeve. The temperature of the water in the bath was about 30°C. The extrudate was cooled to a temperature below 100°C which was sufficient to enable the outer surface of the tube to be gripped by the first haul-off apparatus without damaging the surface or distorting the geometry of the tube.

The extruded polyolefin tube having an outside diameter of 63mm leaving the first part of the process was then passed through a heating unit and drawn using a second haul-off unit operating at a higher speed than the first haul-off unit. A second water bath was positioned between heating unit and the second haul-off unit. The heating unit was an electric tubular oven which used air as the heat transfer medium. The heating unit raised the temperature of the polyolefin tube to a temperature between the two peaks of the differential scanning calorimetry trace i.e. about 123 to 125°C. The difference in the speeds of the two haul-off units resulted in the drawing down of the tube i.e. the length increased and diameter decreased. After leaving the second haul-off unit, the drawn polyolefin tube was cut into lengths.

The process was operated at two extruder output rates as determined by the screw speed of the extruder. At each output rate, the speed of the first haul-off unit was maintained at 2ft/min (61cm/min) and the speed of the second haul-off unit was changed to give different amounts of elongation. 2ft (61cm) samples of the drawn polyolefin tubes were reverted by heating in a fan-assisted oven at 120°C for one hour. The changes in length and diameter of the reverted tubes were measured. The results are given in Table 1.

A length of polyolefin tube produced according to Run 11 was used to line a 13ft (4m) length of steel pipe having an internal diameter of 56mm. The length of polyolefin tube used was approximately 16ft.6inches (5m) in order to ensure sufficient overhand to accomodate the axial shrinkage on reversion. The polyolefin tube was inserted into the steel pipe and fed slowly through a tubular oven at 120°C. Visual inspection of the pipe showed it to have been well lined by the polyolefin tube.

### Example 3

200ft (61m) lengths of polyolefin tube having an external diameter of 63mm were produced from the same polymer blend as used in Example 2. The tubes were produced by extruding through a pipe die fitted to a 2.5inch (63mm) single screw extruder, cooling the extrudate in a water bath and cutting into the 200ft (61m) lengths. These lengths of tube were then drawn using two haul-off units operating at different speeds and a heating unit positioned between the two haul-off units. A water bath was positioned between the heating unit and the second haul-off unit. This water bath was used to cool the drawn tube in order to "freeze in" the orientation and to provide a stable load supporting geometry which could be gripped by the second haul-off unit without damage. The haul-off units were of conventional design for use in the production of pipe. The heating unit was an electric/tubular oven which used air as the heat transfer medium. The heating unit raised the temperature of the polyolefin tubes to a temperature in the range 123 to 126°C i.e. between the two peaks exhibited by DSC analysis of the blend. The first haul-off unit was operated at a lower throughput speed than the second haul-off unit which resulted in the drawing down of the heated polyolefin tube.

The lengths of drawn polyolefin tube were suitable for use in lining a pipe according to the present invention.

EP 0 254 489 B1

TABLE 1

| Run | Screw Speed rpm | 2nd haul off speed (cm/min) | % elongation | length of sample pipe (cms) | | % change in length | Diameter of Sample Pipe | | % change in diameter | Weight of sample pipe g |
|---|---|---|---|---|---|---|---|---|---|---|
| | | | | Before Reversion | After Reversion | | Before Reversion | After Reversion | | |
| 1 | 35 | 73 | 20 | 61 | 55.2 | 9.4 | 58.5 | 61 | 4.27 | 455 |
| 2 | 35 | 79 | 30 | 61 | 55.9 | 8.3 | 59 | 61.5 | 4.24 | 471 |
| 3 | 35 | 85 | 40 | 61 | 53.3 | 12.5 | 55 | 59 | 7.27 | 414 |
| 4 | 35 | 85 | 40 | 61 | 50.8 | 16.6 | 54 | 59 | 9.26 | 388 |
| 5 | 35 | 91 | 50 | 61 | 48.3 | 20.8 | 52.5 | 58.5 | 11.43 | 371 |
| 6 | 35 | 97 | 60 | 61 | 48.9 | 19.8 | 52.5 | 59 | 12.38 | 387 |
| 7 | 30 | 76 | 25 | 61 | 53.3 | 12.5 | 56.5 | 60.5 | 7.1 | 394 |
| 8 | 30 | 82 | 35 | 61 | 50.8 | 16.6 | 54.5 | 60 | 10.1 | 359 |
| 9 | 30 | 88 | 45 | 61 | 50.8 | 20.8 | 52 | 59 | 12.4 | 339 |
| 10 | 30 | 97 | 60 | 61 | 45.7 | 25 | 50 | 58.5 | 17 | 305 |
| 11 | 30 | 103 | 70 | 61 | 43.2 | 29.2 | 49.5 | 58.5 | 18.2 | 293 |

## Claims

1. A method for lining a pipe with a polymeric material comprising forming a tube of the polymeric material, subjecting the tube to a drawing process so that the diameter of the tube is reduced, inserting the tube into a pipe of inside diameter slightly greater than the outside diameter of the drawn tube and treating the tube to cause reversion expansion of the polymeric material such that the tube engages the inside wall of the pipe characterised in that the polymeric material is a polyolefinic material which exhibits two or more crystalline melting peaks when analysed by differential scanning calorimetry (DSC) and in that the drawing process comprises cooling the formed tube and subsequently heating and drawing the tube at a temperature between the temperatures of the lowest and highest crystalline melting peaks.

2. A method as claimed in claim 1 in which the tube is formed by extrusion of the polyolefinic material through a dies, the extrudate is cooled and then heated to and drawn at a temperature which is between the temperatures of the lowest and highest crystalline melting peaks as determined by DSC analysis of the polyolefinic material.

3. A method as claimed in claim 2 in which the extrudate is cooled in a first water bath, heated in a heating unit to a temperature between the temperatures of the lowest and highest crystalline melting peaks as determined by DSC analysis of the polyolefinic material and drawn by a second haul-off unit operating at a greater throughput rate than the first haul-off unit.

4. A method as claimed in claim 3 in which the tube is passed through a second water bath between the heating unit and the second haul-off unit.

5. A method as claimed in any one of the preceeding claims in which the polymeric material is a blend of two or more polyolefins.

6. A method as claimed in claim 5 in which the polyolefinic material is a blend of high density polyethylene and a linear low density polyethylene.

7. A method as claimed in any one of the preceeding claims in which there is at least 2°C between the lowest and the highest crystalline melting peaks as exhibited by DSC analysis of the polymeric material.

8. A method as claimed in claim 7 in which there is at least 5°C between the lowest and the highest crystalline melting peaks as exhibited by DSC analysis of the polymeric material.

9. A method as claimed in any one of the preceeding claims in which the tube is drawn at a temperature which is less than but close to the temperature of the highest crystalline melting peak exhibited by DSC analysis of the polymeric material.

10. A method as claimed in any one of the preceeding claims in which the tube is heated to cause reversion expansion of the polymeric material.

## Patentansprüche

1. Verfahren zum Auskleiden eines Rohres mit einem polymeren Material, umfassend das Bilden einer Röhre aus dem polymeren Material, die Röhre einem Ziehverfahren zu unterwerfen, so daß der Durchmesser der Röhre reduziert wird, Einfügen der Röhre in ein Rohr mit einem Innendurchmesser, der leicht größer ist als der Außendurchmesser der gezogenen Röhre und Behandeln der Röhre, um eine Wiederausdehnung des polymeren Materials zu erzeugen, derart, daß die Röhre und die Innenwand des Rohres ganz aneinanderliegen, dadurch gekennzeichnet, daß das polymere Material ein polyolefines Material ist, das bei der Analyse durch Differential-Scanning-Calorimetrie (DSC) zwei oder mehr kristalline Schmelzmaxima aufweist und dadurch, daß das Ziehverfahren das Abkühlen der gebildeten Röhre und anschließend Erhitzen und Ziehen der Röhre bei einer Temperatur zwischen der Temperatur des niedrigsten und höchsten kristallinen Schmelzmaximums umfaßt.

2. Verfahren nach Anspruch 1, bei dem die Röhre durch Extrusion des polyolefinen Materials durch eine Düse gebildet wird, das Extrudat gekühlt und dann erhitzt wird auf und bei einer Temperatur gezogen wird, die zwischen der Temperatur des niedrigsten und höchsten kristallinen Schmelzmaximums, wie durch DSC-Analyse des polyolefinen Materials bestimmt, liegt.

3. Verfahren nach Anspruch 2, bei dem das Extrudat in einem ersten Wasserbad gekühlt, in einer Heizeinheit auf eine Temperatur zwischen der Temperatur des niedrigsten und höchsten kristallinen Schmelzmaximums, wie durch DSC-Analyse des Polyolefin-Materials bestimmt, erhitzt und durch eine zweite Zieh-Einheit gezogen wird, die bei einer größeren Durchsatzrate als die erste Zieh-Einheit arbeitet.

4. Verfahren nach Anspruch 3, bei dem die Röhre durch ein zweites Wasserbad zwischen der Heizeinheit und der zweiten Zieh-Einheit geleitet wird.

5. Verfahren nach einem der vorhergehenden Ansprüche, bei dem das polymere Material eine Mischung aus zwei oder mehreren Polyolefinen ist.

6. Verfahren nach Anspruch 5, bei dem das polyolefine Material eine Mischung aus Polyethylen hoher Dichte und einem linearen Polyethylen niedriger Dichte ist.

7. Verfahren nach einem der vorhergehenden Ansprüche, bei dem wenigstens 2°C zwischen dem niedrigsten und höchsten kristallinen Schmelzmaximum, wie durch DSC-Analyse des polymeren Materials bestimmt, liegen.

## EP 0 254 489 B1

8. Verfahren nach Anspruch 7, bei dem wenigstens 5°C zwischen dem niedrigsten und höchsten kristallinen Schmelzmaximum, wie durch DSC-Analyse des polymeren Materials bestimmt, liegen.

9. Verfahren nach einem der vorhergehenden Ansprüche, bei dem die Röhre bei einer Temperatur gezogen wird, die niedriger als die Temperatur des höchsten kristallinen Schmelzmaximums, bestimmt durch DSC-Analyse des polymeren Materials, ist, aber nahe bei dieser liegt.

10. Verfahren nach einem der vorhergehenden Ansprüche, bei dem die Röhre erhitzt wird, um eine Wiederausdehnung des polymeren Materials zu erzeugen.

**Revendications**

1. Procédé de revêtement intérieur d'une conduite avec un matériau polymère, comportant le fait de former un tube en matériau polymère, soumettre ce tube à un processus d'étirage de façon que le diamètre du tube diminue, insérer le tube dans une conduite de diamètre intérieur légèrement supérieur au diamètre extérieur du tube étiré et traiter le tube pour provoquer l'expansion inverse du matériau polymère de façon que le tube vienne au contact de la paroi intérieure de la conduite, caractérisé en ce que le matériau polymère est un matériau polyoléfinique qui présente deux ou plus pics de fusion cristalline lorsqu'on l'analyse par calorimétrie par balayage différentiel (DSC) et en ce que le processus d'étirage consiste à refroidir le tube formé puis à chauffer et à étirer le tube à une température comprise entre les températures du pic de fusion cristalline le plus bas et du pic de fusion cristalline le plus haut.

2. Procédé selon la revendication 1, dans lequel on forme le tube par extrusion du matériau polyoléfinique à travers une filière, on refroidit le produit extrudé puis on le porte à température comprise entre les températures du pic de fusion cristalline le plus bas et du pic de fusion cristalline le plus haut tels que déterminés par l'analyse du matériau polyoléfinique par calorimétrie par balayage différentiel, et on l'étire à cette température.

3. Procédé selon la revendication 2, dans lequel on refroidit le produit extrudé dans un premier bain d'eau, on le chauffe dans un groupe de chauffage à une température comprise entre les températures du pic de fusion cristalline le plus bas et du pic de fusion cristalline le plus haut tels que déterminés par l'analyse du matériau polyoléfinique par calorimétrie par balayage différentiel et dans lequel le produit extrudé est étiré par un second groupe de tirage opérant à une vitesse de sortie supérieure à celle du premier groupe de tirage.

4. Procédé selon la revendication 3, dans lequel on fait passer le tube dans un second bain d'eau placé entre le groupe de chauffage et le second groupe de tirage.

5. Procédé selon l'une quelconque des revendications précédentes, dans lequel le matériau polymère est un mélange de deux ou plus polyoléfines.

6. Procédé selon la revendication 5, dans lequel le matériau polyoléfinique est un mélange de polyéthylène haute densité et d'un polyéthylène linéaire basse densité.

7. Procédé selon l'une quelconque des revendications précédentes dans lequel il y a une différence d'au moins 2°C entre le pic de fusion cristalline le plus bas et le pic de fusion cristalline le plus haut tels qu'indiqués par l'analyse du matériau polymère par calorimétrie par balayage différentiel.

8. Procédé selon la revendication 7 dans lequel il y a une différence d'au moins 5°C entre le pic de fusion cristalline le plus bas et le pic de fusion cristalline le plus haut tels qu'indiqués par l'analyse du matériau polymère par calorimétrie par balayage différentiel.

9. Procédé selon l'une quelconque des revendications précédentes, dans lequel on étire le tube à une température inférieure, mais proche, de la température du pic de fusion cristalline le plus haut indiqué par l'analyse du matériau polymère par calorimétrie par balayage différentiel.

10. Procédé selon l'une quelconque des revendications précédentes, dans lequel on chauffe le tube pour provoquer l'expansion inverse du matériau polymère.

FIG.1

EP 0 254 489 B1

FIG.2

EP 0 254 489 B1